# EUROPEAN PATENT SPECIFICATION

(11) **EP 1 621 492 B1**
(45) Date of publication and mention of the grant of the patent: **15.04.2009**
(21) Application number: 05014481.5
(22) Date of filing: 04.07.2005
(51) Int. Cl.: B65G 47/91

(54) **Lifting device**
Hebevorrichtung
Dispositif de levage

(30) Priority: 09.07.2004 DK 200401088; 09.07.2004 DK 200401087
(43) Date of publication of application: 01.02.2006
(73) Proprietor: Predell Vacuum ApS, 8643 Ans By (DK)
(72) Inventor: Fischer, Niels Christian, 6780 Skaerbaek (DK)
(74) Representative: Gregersen, Niels Henrik

(56) References cited:
- PATENT ABSTRACTS OF JAPAN vol. 2002, no. 04, 4 August 2002 (2002-08-04) -& JP 2001 341089 A (YAMANAKA YASUO), 11 December 2001 (2001-12-11)
- PATENT ABSTRACTS OF JAPAN vol. 1999, no. 14, 22 December 1999 (1999-12-22) -& JP 11 254365 A (KAWANO AKIYOSHI), 21 September 1999 (1999-09-21)
- PATENT ABSTRACTS OF JAPAN vol. 2003, no. 09, 3 September 2003 (2003-09-03) -& JP 2003 142896 A (FUJI MACH MFG CO LTD), 16 May 2003 (2003-05-16)
- PATENT ABSTRACTS OF JAPAN vol. 2003, no. 12, 5 December 2003 (2003-12-05) -& JP 2004 114220 A (YAMANAKA YASUO), 15 April 2004 (2004-04-15)
- PATENT ABSTRACTS OF JAPAN vol. 1996, no. 11, 29 November 1996 (1996-11-29) -& JP 08 174462 A (MATSUSHITA ELECTRIC WORKS LTD), 9 July 1996 (1996-07-09)

## Description

### FIELD OF THE INVENTION

The present invention relates to a vacuum lifting device for lifting and handling objects, preferably a plurality of individual objects in a production line, according to the preamble of claim 1.

### BACKGROUND OF THE INVENTION

Vacuum lifting devices are very useful for lifting and moving objects in production line environments such as packaging and stacking. The handling of objects in a production line is required to be fast, precise, reliable and cost effective.

The use of vacuum to handle objects is well established. The vacuum technique is often used in full automated production lines in combination with robots. Vacuum lifting devices can be designed to rotate, tilt, lift and hold objects of nearly any material, which makes it a universal gentle handling tool in automated production lines.

US patent no. 6 039 529 describes a vacuum lifting plate comprising a number of passageway ball valves. The disclosure relates to a vacuum plate comprising a vacuum chamber in which the underside has a plurality of ball valves. Each valve comprises of two cylindrical shaped passages where a first cylindrical passage comprises a movable ball and a second passage with a smaller diameter than the first passage. The second passage serves as an escape hole for a leak flow of air.

A bottom plate of an elastic rubber material is attached to the underside of the vacuum plate, thus, a gentle and airtight connection to the objects can be achieved. The rubber plate covers the entire underside of the vacuum plate with passages corresponding to the passages in the vacuum plate. A filter is attached between the vaccum plate and the rubber material to reduce the amount of dust and other particles to be sucked into the passages. The filter also serves as a lower limit for the motion of the ball.

In spite of the filter, dust and other particles will eventually be built-up inside the valve, which could result in blocking of the small escape hole. A cleaning of a single ball valve is in practice not possible because, for proper cleaning, the rubber plate and the filter has to be removed from the entire vacuum plate. The rubber plate and filter is often glued to the underside of the vacuum chamber and some hardened glue is always left behind when the rubber plate and the filter is removed. The hardened glue has to be removed before a new rubber plate and filter can be attached to the vacuum plate. If the glue is not removed there is a high risk of air leakage due to the uneven surface created by the hardened glue. It is very time consuming and expensive to restore a vacuum plate, because the vacuum plate has to be completely cleaned which involves a high amount of manual labour. The rubber plate, the filter and the balls in the valves have to be exchanged with new ones each time the vacuum plate is restored which is also very expensive. In addition to this the cost of an unavoidable production stop has to be added to the cost of the restoration. Because of the extensive work for the restoration, such production stops can have a substantial length of time leading to reduced income.

US patent no. 5 409 347 describes a carrying and positioning robot which can carry any object regardless of the size of the object. The robot comprises a plurality of suction pads which are attached to a number of supporting bars. The invention is especially suited for carrying and handling of a large single object, but the invention is not suited for the handling and positioning of a plurality of small objects, because the suction valves are relatively large which reduces the number of valves in the system. It is often necessary to use vacuum plates with hundreds of valves when handling a plurality of small objects. According to a embodiment invention the suction pads are implemented as ball valves which ball valves comprises a separate connecting hole for a leak flow of air. The small connection hole, which hole typically is about 0.8mm in diameter, is likely to be obstructed by the built-up of dirt and dust which results in expensive production stop and cleaning of the valves.

In order to provide a leak flow in a different way, WO 90/11244 discloses a lifting device with suction grip elements having ball valves, where each ball valve has a conical valve seat with a surface structure or surface roughness such that a leak flow is provided between the ball and the conical valve seat. However, a valve seat with a surface roughness is likely to be obstructed by the built-up of dirt and dust which results in a malfunctioning of the valve and requires frequent cleaning thereof, which is disadvantageous.

In JP 2001 341089 is described a lifting device having features corresponding to the preamble of claim 1.

### DESCRIPTION / SUMMARY OF THE INVENTION

It is therefore the object of the invention to provide a lifting device which is easier to maintain than systems according to prior art.

This object is achieved by a lifting device for lifting and moving articles, comprising a vacuum chamber connected to a suction element for attachment of articles by negative pressure to a suction side of the suction element. The suction element has at least one ball valve with an air channel for vacuum communication between the vacuum chamber and the articles through the air channel. The ball valve comprises an air leak passage, a ball and a first opening, the first opening being located on the opposite side of the ball relative to the suction side. The first opening has a cross section that prevents the ball to fit through the first opening. According to the invention, the air leak passage is provided as part of the first opening, where the opening deviates from a circular transversal cross section in order to provide an air leak passage when the ball is resting against the first opening.

The first opening has an oval, or elliptical shape. The deviating part of the first opening provides an air leak even when the ball rests tightly against the first opening. This way, an air leak passage is always assured. By reducing the leak flow, the control of the vacuum could be done much more precise.

Generally, a leak passage is necessary for the functioning of lifting devices. In prior art, such leak passages are provided by narrow channels, for example as disclosed with reference number 24 in FIG. 2 of US patent no. 6 039 529 and disclosed with reference number 17 in FIG. 3 of US patent no. 5 409 347. Such narrow channels may easily be blocked by dust and other kind of dirt and are very difficult to clean and have to be cleaned in a lengthy procedure. According to the invention, by forming a non-circular opening, an air leak passage is assured that is self cleaning, because dirt is sucked out of the first opening and into the vacuum chamber when the ball released from the first opening. This is a great advantage because the invention assures an easier maintenance as the air leak passages do not have to be cleaned.

In this connection, it should be noted that the deviation from the circular shape is meant as a macroscopic deviation from a circle and not meant to be due to surface structure or roughness. In WO 90/11244, a surface structure or surface roughness is disclosed for the valve seat, which does not alter the fact that the disclosed seat opening has a circular geometry in its cross section - it is only the surface of the circular opening that has a microscopic overlay distortion due to surface structure or surface roughness. According to the invention, it is the deviation from a circular geometry that prevents the accumulation of dirt and dust because no narrow passages are provided, when the ball does not rest against the opening. Thus, the opening may advantageously have a smooth wall in order to prevent accumulation of dirt and dust.

Another great advantage has been observed with respect to the invention. For practical use, the leak channel may be made smaller than in prior art due to the following fact. In prior art separate channels, the channels need a certain width in order not to clog quickly under dusty conditions. This implies that a rather high suction rate is necessary for the pumps creating vacuum. The air leak channels according to the invention do practically not suffer from the risk of clogging and can therefore be made much smaller reducing the necessary suction power of the corresponding vacuum pumps. This reduces the costs for a vacuum system as compared to prior art.

Typically, the lifting device has a plurality of air channels.

In a further embodiment, the suction element has a polymer plate made of elastic airtight material for attachment to the articles with the suction side. Further, the suction element has a stiffening support for the polymer plate, and the support has re-usable fastening means for fastening the support with the polymer plate to the vacuum chamber, for example screws or bolts cooperating with corresponding fastening means of the vacuum chamber. Typically, the vacuum chamber is fixed to a robot and by using the invention, the vacuum chamber does not have to be removed from the robot arm but only the polymer plate with the support, which is advantageous as it can be done more quickly. This is also in contrast to prior art, where a demounting of the vacuum chamber has to be done in order to rip and scrape the polymer plate from the support and subsequently clean the remnants after the removal of the polymer plate from the vacuum chamber. Thus according to the invention, the support and the rubber plate may be removed without damaging the rubber plate in order to get access to the valves, such that the expensive rubber plate can be re-used. Furthermore, by using a suction element with a suction side of elastic polymer, e.g. rubber, the flexible suction side adapts to the shape of an article to form an airtight connection between the article and the suction element.

This embodiment is especially valuable, where the ball valve is demountable as a valve unit from the lifting device. This way, a quick and easy demount and remount may be achieved for cleaning the valves in contrast to prior art, where it is necessary to cut the elastic material away in order to get access to the valves. It is a great advantage that the ball valves are demountable and remountable as valve units.

According to prior art, a malfunctioning of a valve induces a substantial work. According to prior art, the vacuum chamber has to be demounted from the robot and transported to a cleaning facility where the rubber plate has to be removed with mechanical means followed by subsequent cleaning of the remaining surface to remove remnants; a grid holding the balls in the ball valves has to be removed, the balls and possible o-rings removed from the valve holes, the holes being cleaned, before new balls are inserted into the holes and closed with a grid, after which a new rubber plate is glued onto the chamber before installation of the chamber in the robot.

According to the invention with demountable valve units, the chamber may remain on the robot, the rubber plate with the support is demounted on site and the malfunctioning ball valve unit can be exchanged on site before remount of the rubber plate. The latter method can be performed within a very short time as compare to the prior art methods. Thus, production stops are short and costs are low when applying the invention. Also, producers may choose to exchange valve units frequently at low cost on a standard procedure in order to avoid malfunctioning.

In a further embodiment, the vacuum chamber has a valve hole through the wall of the vacuum chamber for receiving the valve unit therein, and the valve unit has a collar and an o-ring arranged at a distance on the valve unit corresponding to the thickness of the vacuum chamber wall in order for the collar and the o-ring to act as complementary releasable fastening means when the valve unit is placed in the valve hole.

For the lifting device according to the invention, a separate valve unit may be used that has a valve body comprising a valve chamber between a first opening and a second opening to form a passage through the valve body, the valve unit comprising a ball in the valve chamber arranged movably between the first and the second opening, the first opening having a cross section that prevents the ball to fit through the first opening, wherein an air leak passage is provided as part of the first opening for preventing closure of the first passage when the ball rests against the first opening.

Though the invention concerns a ball valve with an opening deviating from a circular transversal cross section in order to provide an air leak passage when the ball is resting against the first opening, there are several aspects that may improve prior art even without such a non-circular opening in the ball valve. These are listed in the following.

For example, the purpose of providing a lifting device which is easier to maintain than systems according to prior art is also achieved by a lifting device for lifting and moving articles comprising a vacuum chamber connected to a suction element for attachment of articles by negative pressure to a suction side of the suction element. The suction element has at least one air channel for vacuum communication between the vacuum chamber and the articles through the air channel. The air channel is demountable as an air channel unit from the lifting device.

It is a great advantage that the air channels, such as ball valves, are demountable and remountable as air channel units, for example as ball valve units, because exchange of a single unit can be performed quickly and easily without having to rely on cleaning methods including the complete arrangement. Single units may be produced in large numbers and at low costs and kept on stock on site for use in case that a malfunctioning of an air channel unit occurs. Instead of having to rely on time consuming and complicated cleaning procedures, a malfunctioning unit can quickly be exchanged with a new unit that is guaranteed to function properly. This reduced time for repair includes a reduced loss of valuable production time. Overall, this implies an easier maintenance of the lifting device according to the invention. Also, producers may choose to exchange valves frequently at low cost on a standard procedure in order to avoid malfunctioning.

In a further embodiment, the lifting device according to the invention comprises a plurality of holes configured for receiving an air channel unit. Such plurality of holes may be used for air channel units, such as ball valves or channels without valves, or even for detectors, for example for measuring the presence of an article near the suction side of the lifting device or for measuring the distance to an article from the suction side. The detectors in this case are produced as units having dimensions adapted for placement in the holes configured for receiving the air channel units.

In an embodiment, the lifting device according to the invention, comprises holes and air channel units that are conical countersunk for better leak-tightness. A better fit and leak-tightness is achieved due to a relatively large connecting surface between the channel unit and the hole in a vacuum chamber. Furthermore, the air channel unit becomes more aligned to the surface of the vacuum chamber which gives a more flat surface for a mounting of a vacuum plate or the like. This minimizes the risk for air leakages between the air channel units.

Optionally, such a lifting device comprises a plurality of separate vacuum chambers, each vacuum chamber being connected to a plurality of holes for receiving air channel units such as valves. The pressure in the plurality of vacuum chambers may be mutually different. This way, different zones may be provided having different pressure for lifting and handling of objects with different weight and permeability e.g. packaging of paper and articles. In this way, it is possible to prevent that the packaging is destroyed and sucked into the lifting device due to large negative pressure.

In a practical embodiment, the lifting device comprises at least one vacuum chamber having at least one hole through the wall of the vacuum chamber for receiving an air channel unit therein, and wherein the air channel unit has a protrusion and an o-ring arranged at a distance on the air channel unit corresponding to the thickness of the vacuum chamber wall in order for the protrusion and the o-ring to act as complementary releasable fastening means when the air channel unit is placed in the hole. This way it is fast and easy to correctly mount and remount an air channel unit into a hole of a vacuum chamber, such as installing a ball valve into a valve hole of a metal profile. The protrusion and the o-ring provide an easy and secure fastening of the valve body to the profile, as the protrusion after mounting of the valve is located on one side of a valve hole in the profile and the o-ring is located on the opposite side of the valve hole 18. Furthermore, the elasticity of the o-ring allows demount of the valve from the valve hole by forced suppression of the o-ring when the valve is pressed out of the valve hole. A valve is easily remounted by pressing it into a hole of one of the profiles where the o-ring results in a click action, as the o-ring after suppression during insertion into a valve hole expands again on the opposite side of the valve hole. The o-ring and the protrusion assure that the valve is correctly installed into a hole of a profile.

According to the invention, the suction element has a polymer plate made of elastic airtight material for attachment to the articles with the suction side. Further, the suction element has a stiffening support for the polymer plate, and the support has re-usable fastening means for fastening the support with the polymer plate to the vacuum chamber cooperating with corresponding fastening means of the vacuum chamber, for example screws or bolts. Typically, the vacuum chamber is fixed to a robot, and by using the invention the vacuum chamber does not have to be removed from the robot arm but only the polymer plate, which is advantageous as it can be done more quickly. This is also in contrast to prior art, where a demounting of the vacuum chamber has to be done in order to rip and scrape the polymer plate from the support and subsequently clean the remnants after the removal of the polymer plate from the vacuum chamber. Thus according to the invention, the support and the rubber plate may be removed without damaging the rubber plate in order to get access to the valves such that the expensive rubber plate can be re-used. Furthermore, by using a suction element with a suction side of elastic polymer, e.g. rubber, the flexible suction side adapts to the shape of an article to form an airtight connection between the article and the suction element.

This embodiment is especially valuable, where a ball valve is demountable as a valve unit from the lifting device. By removing the rubber plate and the support by unscrewing them from the vacuum chamber, the valve units are accessible. Thus, a quick and easy demount and remount may be achieved for cleaning the valves or for changing the valves. This is in contrast to prior art, where it is necessary to cut the elastic material away in order to get access to the valves.

According to prior art, a malfunctioning of a ball valve in a lifting device induces a substantial work. According to prior art, the vacuum chamber has to be demounted from the robot and transported to a cleaning facility where the rubber plate has to be removed with mechanical means, typically by ripping and scraping off the rubber plate, followed by subsequent cleaning of the remaining surface to remove remnants, a grid holding the balls in the ball valves has to be removed, the balls and possible o-rings removed from the valve holes, the holes being cleaned, before new balls are inserted into the holes and closed with a grid, after which a new rubber plate is glued onto the chamber before installation of the chamber in the robot.

According to the invention with demountable air channel units such as ball valve units, the chamber may remain on the robot, the rubber plate with the support is demounted on site, for example by unscrewing it, and the malfunctioning air channel unit can be exchanged on site before remount of the rubber plate. The latter method can be performed within a very short time as compare to the prior art methods. Thus, production stops are short and costs are low when applying the invention.

### SHORT DESCRIPTION OF THE DRAWINGS

The invention will be explained in more detail with reference to the drawing, where
- FIG. 1a, 1b, 1c, 1d: show different views of an embodiment of an assembled lifting device,
- FIG. 2: shows the three profiles with a mounting flange,
- FIG. 3: shows a perspective view of a vacuum plate,
- FIG. 4: shows a perspective view a rubber plate,
- FIG. 5: shows a cross-section of a corner of the assembled lifting device,
- FIG. 6: shows a side profile,
- FIG. 7a: shows a cross-section of a valve body,
- Fig. 7b: shows a perspective view of a value body
- FIG. 8: shows a cross-section of an assembled ball valve and
- FIG. 9: shows an embodiment of an air valve with a countersunk collar.
- FIG. 10: shows how a valve is assembled.

### DETAILED DESCRIPTION

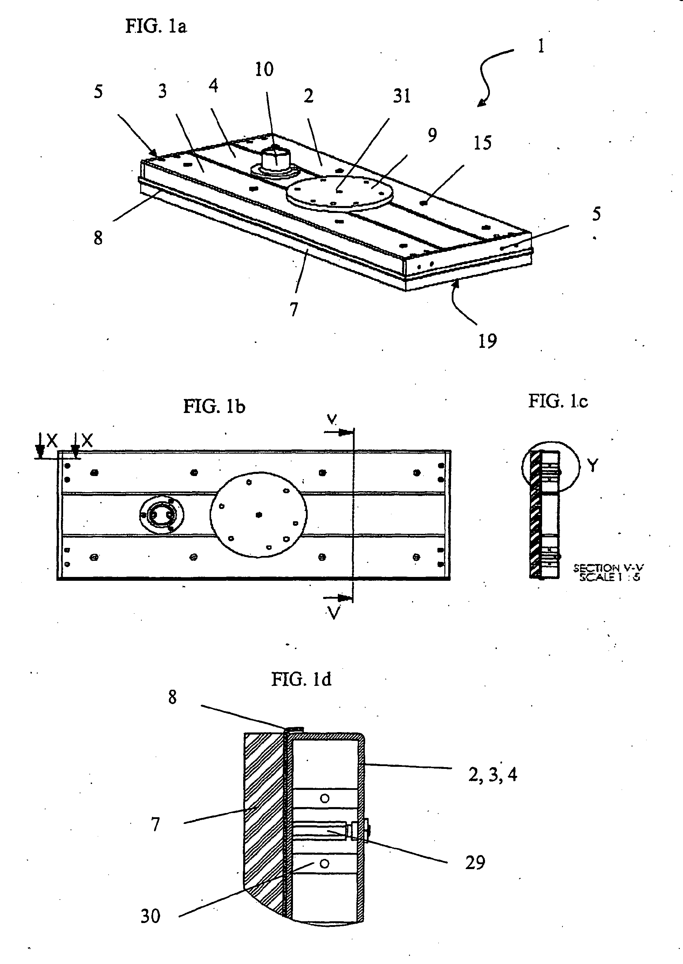

FIG. 1 shows an embodiment of the lifting device 1, according to the invention. The lifting device 1 comprises two side profiles 2 and 3 and a central profile 4. The lifting device 1 is closed at both ends by two end profiles 5. A first side of a vacuum plate 8 is attached to the profiles 2, 3, 4 and a rubber plate 7 is attached on the second side of the stiffening support 8, for example glued onto the stiffening support 8. A circular mounting flange 9 for mount on a lifting arm (not shown) is attached to the three profiles 2, 3 and 4. The lifting device 1 further comprises a vacuum connection 10 mounted to the centre profile 4.

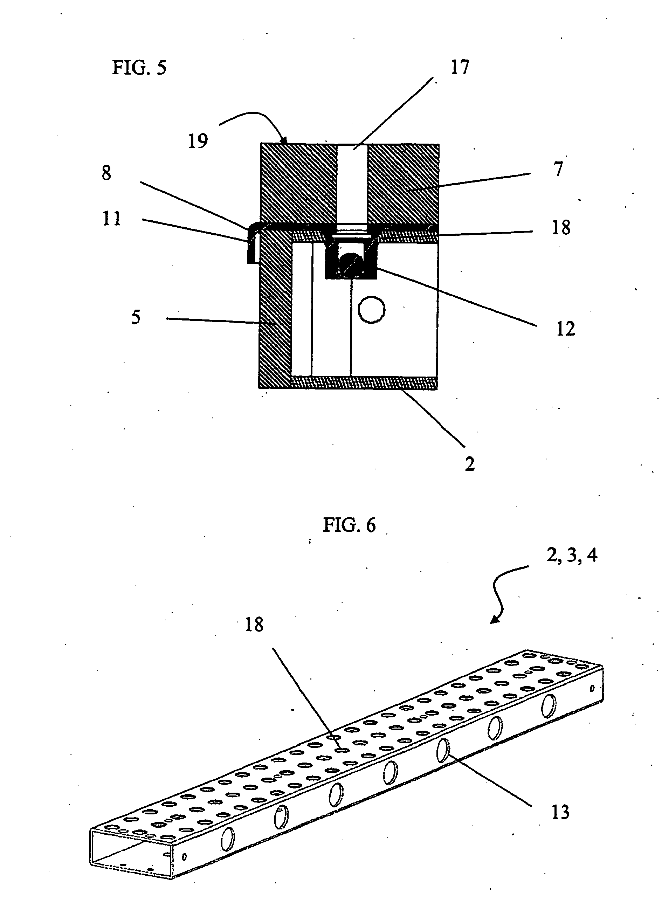

The suction side 19 of the assembly with the rubber plate 7 and the vacuum plate 8 and the three profiles 2, 3 and 4 comprises a plurality of through going holes for suction of air through the holes and through valves installed in the profiles, which will be explained in more detail in connection with FIG. 5 below.

A mounting flange 9 is placed on the back side of the profiles 2, 3, 4 opposite to the suction side 19. The mounting flange 9 comprises a number of holes, for example screw holes, for easy mounting of the lifting device 1 to any kind of machinery, e.g. a robot. The centre hole 31 placed of the mounting flange 9 is intended for a guidance of the flange 9 to the central profile 4 when mounted.

The side profiles 2 and 3 comprise a number of through-going holes 15 used to attach the vacuum plate 8 with the rubber plate 7 by a number of bolts 29 extending through the profiles 2, 3, which facilitates attachment and detachment. This is shown in more detail in FIG. 1d which is an enlarged part of the cross sectional view of FIG. 1c. In order to prevent deformation of the profiles 2, 3, 4 when the bolts 29 are fastened with nuts, brackets 30 are used inside the profiles 2, 3, 4.

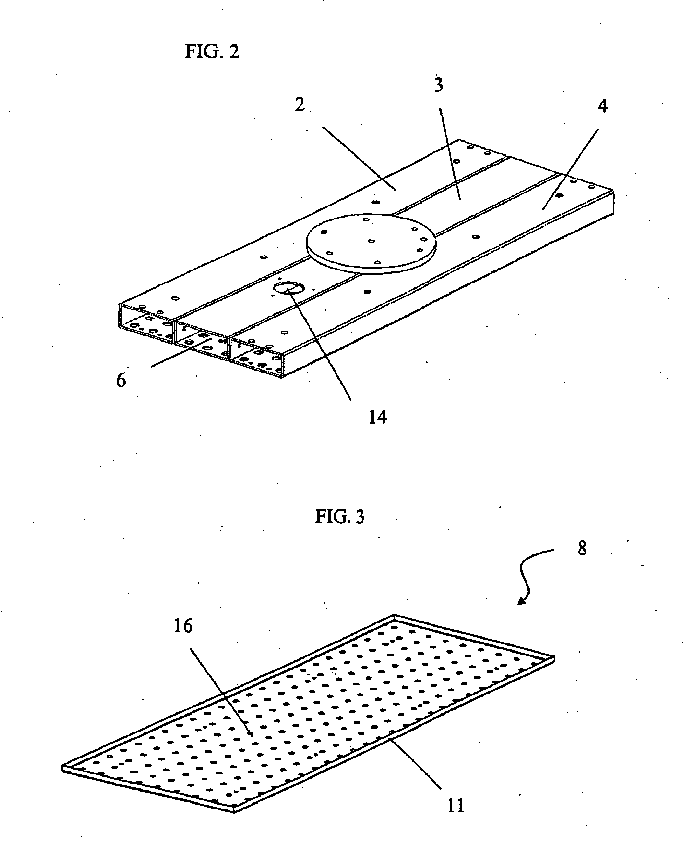

As illustrated in FIG. 2, the profiles 2, 3, 4 are standard-sized, rectangular tubes to keep the production price of the lifting device low. As such tubes are commercially available at low cost, for example as extruded profiles, production is easy and can be done quickly with low effort, mainly being reduced to cutting of the profile and drilling of the valve and mounting holes.

In FIG. 2 the three profiles 2, 3, 4 are shown assembled. The two side profiles 2 and 3 are glued and bolted to the centre profile 4, which comprises a connection hole 14 for the mounting of a vacuum connection 10. By gluing the profiles 2, 3, 4 together, an airtight attachment of the profiles is achieved. As illustrated in more detail in FIG. 6 showing a profile 2 with valve holes 18, the three profiles 2, 3 and 4 comprise a number of connection holes 13 between the profiles such that one vacuum chamber 6 is achieved by connecting the three profiles 2, 3, 4.

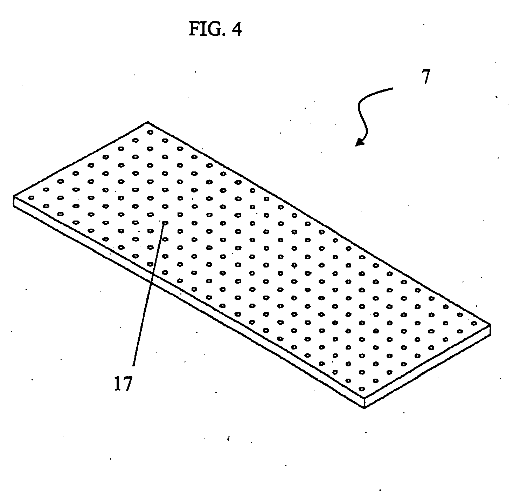

FIG. 3 shows the vacuum plate 8 comprising a plurality of holes 16. The positions of the holes 16 match with the positions of the corresponding valve holes 18 in the profiles 2, 3, 4 and the corresponding holes 17 in the rubber plate 7 as shown in FIG. 4. The edge 11 of the stiffening support 8 as shown in FIG. 3 is bent in a 90 degrees angle for an easy mounting of the combined stiffening support 8 and rubber plate 7 to the profiles 2, 3, 4. The rubber plate 7 provides a flexible gripping surface for an airtight connection to an object can be achieved.

Fig. 5 shows a cross-section X-X of FIG. 1b of a corner of the assembled lifting device 1 where a valve 12 is installed in a vacuum hole 18 in the profile 2. The figure further illustrates the combination of the stiffening support 8 and rubber plate 7 comprising a hole 17 providing a connection for the valve 12 to the front end suction side 19 of the assembly. The end plate 5 can also be seen on the figure.

For replacement or cleaning of valves, the combined rubber plate 7 and stiffening support 8 are demounted from the profiles 2, 3, 4 by unscrewing and removing the bolts 29 extending through the profiles 2, 3, 4. The valve 12 is then accessible from the suction side for demount and replacement. After replacement, the combined rubber plate 7 and stiffening support 8 are screwed onto the profiles 2, 3, 4 again. In contrast to prior art techniques, the rubber plate 7 does not have to be removed by any ripping-off technique which damages the rubber plate 7 and no subsequent cleaning technique has to be applied for removing rubber remnants and glue. Instead, the rubber plate 7 and the stiffening support 8 form one unit that can easily be detached and attached by bolts 29 or other releasable means.

In a preferred embodiment, the stiffening support 8 is mounted with its first side onto the rubber plate 7 and has on its opposite side a thin layer of elastic polymer (not shown) in order to tighten the space between the stiffening support 8 and the profiles 2, 3, 4 when the stiffening support 8 rests against the profiles 2, 3, 4.

The end profile 5 is effectively guided to the profiles by the bended edge 11 of the stiffening support 8. The end plate 5 is also fastened to each side profile 2, 3 by a number of bolts (not shown).

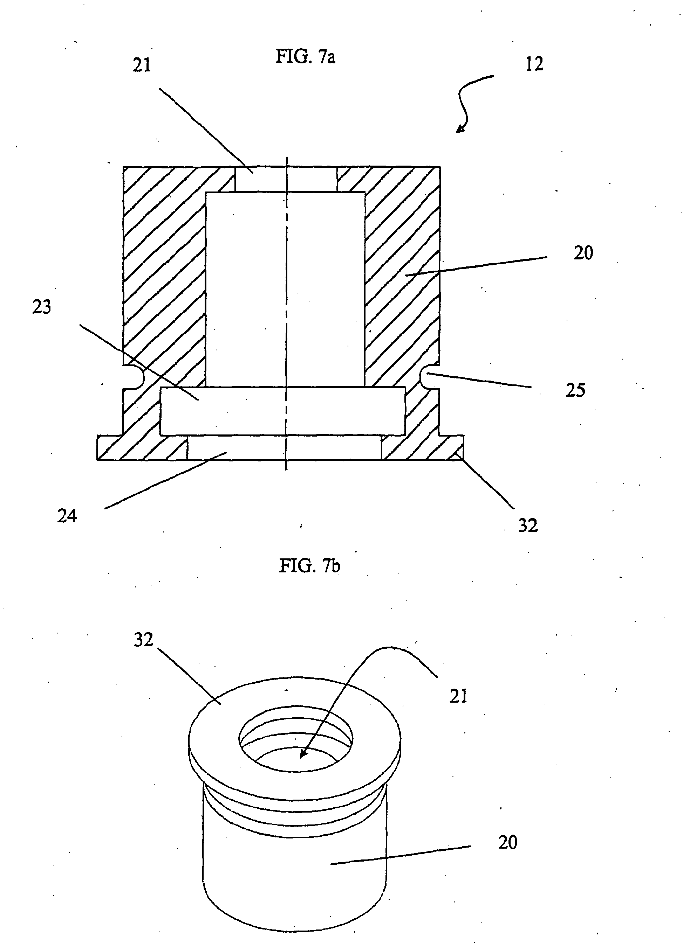

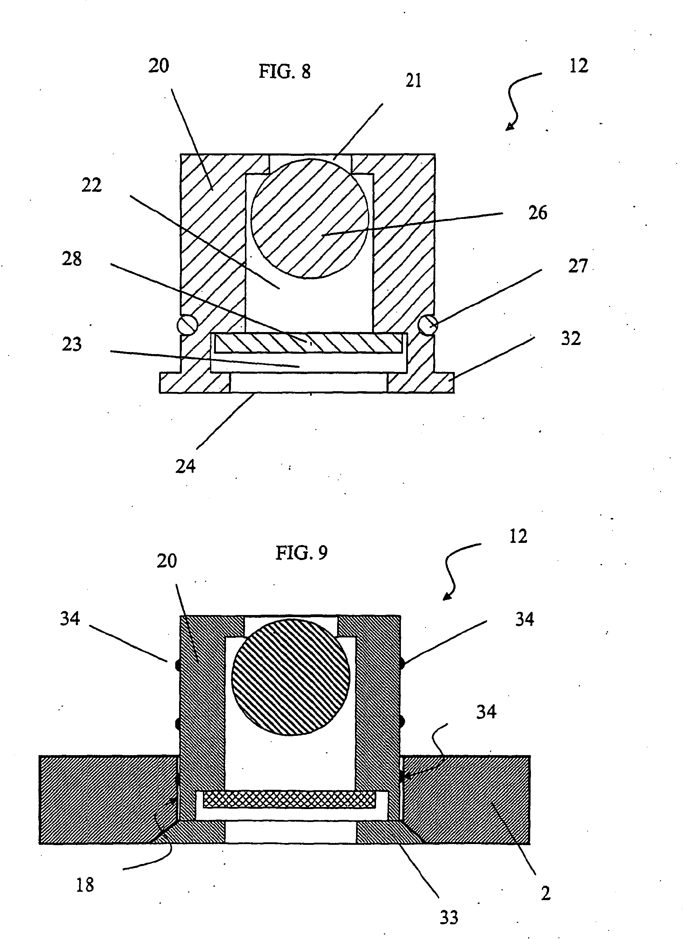

A valve 12 is illustrated in greater detail in FIG. 7a which a cross-section of a valve and in FIG. 7b which is a perspective view. The valve comprises a body 20 with a first opening 21 providing a passage of air from the valve body 20 to a vacuum chamber inside the profiles 2, 3, 4. As illustrated in FIG. 8 and in a perspective view in FIG. 9, the valve chamber 22 comprises enough space for a ball 26 to be movable and for a flow of air to pass around the ball through the valve body 20. The cylindrical space 23 is intended for a filter 28 to be installed as shown in FIG. 8 to prevent dirt and other particles from being sucked into the valve 12 and further into the vacuum chamber 22. A second opening 24 provides a passage for air to flow through the valve from the suction side 19 of the lifting device.

In an embodiment of the invention the first opening 21 is about between 0.02 and 0.1 mm, preferably 0.05 mm, longer than wide making the first opening a bit oval in order to form a leak passage for the air. This way, the leak flow of air leak is reduced considerably compared to prior art separate channels. By a reducing the leak flow, the control of the vacuum can be done much more precise.

As shown in FIG. 7, the valve body 20 further comprises a recess 25 for the fastening of an O-ring 27 as illustrated in Fig. 8. The o-ring is intended for fastening the valve body 20 in the valve holes 18 of a profile as illustrated in FIG. 6 and illustrated assembled in FIG. 5. The collar 32 and the O-ring 27 provide an easy and secure fastening of the valve body to a profile 2, 3, 4, as the collar 32 after mounting of the valve 12 is located on one side of a valve hole 18 in the profile 2, 3, 4 and the o-ring 27 is located on the opposite side of the valve hole 18. Furthermore, the elasticity of the o-ring 27 allows demount of the valve 12 from the valve hole 18 by forced suppression of the o-ring 27 when the valve 12 is pressed out of the valve hole 18. A valve 12 is easily remounted by pressing it into a hole 18 of one of the profiles 2, 3, 4 where the o-ring 27 results in a click action, as the o-ring 27 after suppression during insertion into a valve hole 18 expands again on the opposite side of the valve hole 18. For this, the distance between the collar 32 and the o-ring 27 corresponds to the depth of the valve hole 18. The o-ring 27 and the collar 32 assure that the valve 12 is correctly installed into a hole 18 of a profile 2, 3, 4.

FIG. 9 shows an embodiment of the invention where the valve body 20 comprises a countersunk collar 33 for a tight connection to the profile 2. The countersunk collar 33 of the valve body 20 is conical shaped to fit a corresponding countersunk hole 18 of the profile 2. This way, a better fit and leak-tightness is achieved due to a relatively large connecting surface between the valve body 20 and a hole 18 in the profile 2. Furthermore, the valve 12 becomes more aligned to the surface of the profile 2 which gives a more flat surface and a tighter connection when a stiffening support 8 is installed. This minimizes the risk for an air leakage between the valves. The countersunk hole 18 in the profile 2 can be made by a cutter in one process, which minimizes the production costs.

The protrusions 34 are for a better fit into the hole 18 of the profile 2. The valve 12 might comprise one or more protrusions 34 instead of the o-ring 27 as previously described. The protrusions 34 could be circular rings or small ball shaped protrusions placed at the outer surface of the valve body 20, preferably made of polymer, which also can be chosen as material for the valve body. This way, the protrusions 34 may be an integrated part of the valve body and may advantageously be produced by polymer moulding.

In an alternative embodiment, the distance between the collar countersunk 33 and a protrusion 34 is greater than the depth of the valve hole 18 resulting in a loose fit. When the lifting device is placed with the suction side downwards and the vacuum plate is removed, the valve falls down a bit without falling completely out of the hole because of the protrusion 34. This makes it easy to get a grip of the valve by the collar 33 with a gripping tool. This way, the valve can be easily removed. The protrusion 34 prevents the valve from falling out when the lifting device has the suction side placed downwards.

Furthermore, the system with rather thin-walled, extruded profiles 2, 3, 4 and valve units 12 fastened in the thin walls reduces the weight of the system allowing smaller and cheaper robots to be used, which is a further advantage of the invention.

According to an embodiment of the invention the valve body 20 has an outer diameter of 13 mm and a collar 32 with an approximate diameter of 15 mm. Because the outer diameter of the valve body 20 is relatively small, a high concentration of valves is possible on lifting devices.

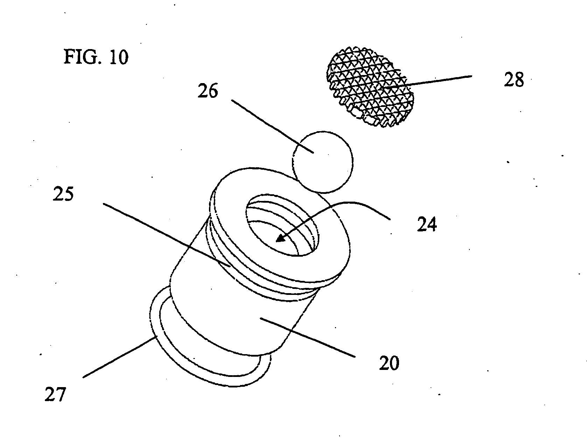

Fig. 10 shows the assembling of a valve 12 comprising a valve body 20, a ball 26, preferably a metal ball, and a filter 28. The filter 28 is a small round metal grid which is easily installed and removed because it is pliable and the valve body 20 leaves the necessary space for a tool to be used when a filter is installed or removed. The O-ring 27 is to be installed in the recess 25.

In an alternative embodiment of the invention, the valve body consists of two counterparts that are assembled after introduction of a ball into the valve 12. The first body part may comprise an embedded filter before assembly. This way, the cost of production of the valves is reduced and the assembly facilitated.

The first opening 21 is slightly deviating from a circular form in order not to be completely blocked by the ball 26 when resting against the first opening 21. This way, an air leak passage is always assured. Generally, a leak passage is necessary for the functioning of lifting devices. In prior art, such leak passages are provided by narrow channels, for example as disclosed with reference number 24 in FIG. 2 of US patent no. 6 039 529 and disclosed with reference number 17 in FIG. 3 of US patent no. 5 409 347. Such narrow channels may easily be blocked by dust and other kind of dirt and are very difficult to clean. According to the invention, by forming a non-circular first opening 21, an air leak passage is assured that is self cleaning, because dirt is sucked out of the first opening 21 and into the vacuum chamber 6 in the profiles 2, 3, 4, when the ball 26 is released from the first opening 21. This is a great advantage as compared narrow air leak channels according to prior art.

It should be mentioned, that the vacuum suction from the vacuum chamber 6 in the profiles 2, 3, 4 through the valve 12 counteracts the gravity of the ball 26, when the lifting device is operated with the suction side 19 directed mainly downwards. However, the principle of the invention is not limited to devices operating vertically. As an alternative embodiment, the suction through the valve may be counteracted by a spring supporting the ball 21 in the valve. This way, the lifting device according to the invention may be operated in a variety of orientations, for example for lifting articles with the lifting device attached to the side of the articles.

In a lifting device according to the invention, holes 18 may not only be provided for valve units 12 but also for detector units. Such detector units may include detectors for detecting, whether there is an article in the vicinity of the suction side 19 or for detecting the distance to an article from the suction side 19. In addition or alternatively, some holes 18 may be provided for air channel units without valves 12 in these units. Such units may be provided with smaller channels through which air can flow, for example for lifting object with reduced weight such as paper package.

The air channel units may be provided with different colours in order to mark special groups of units on the lifting device, for example for indicating which of the valve units that have been changed recently. Also, air channel units without valve, the valve units or detector units may have different colours for differentiation purposes.

A lifting device according to another aspect of the invention may also comprising a plurality of separate vacuum chambers (2, 3, 4, 6), each vacuum chamber (2, 3, 4, 6) being connected to a plurality of holes (18) for receiving air channel units or valve units, the pressure in the plurality of vacuum chambers (2, 3, 4, 6) being mutually different. This way, different zones may be provided having different pressure.

## Claims

1. Lifting device for lifting and moving articles, comprising a vacuum chamber (2, 3, 4) connected to a suction element (7, 8,12) for attachment of articles by negative pressure to a suction side (19) of the suction element (7, 8, 12), the suction element (7, 8, 12) having at least one ball valve with an air channel (17, 18, 21, 22, 23, 24) for vacuum communication between the vacuum chamber (2, 3, 4) and the articles through the air channel (17, 18, 21, 22, 23, 24), the ball valve (12) comprising an air leak passage, a ball (26) and a first opening (21), the first opening (21) being located on the opposite side of the ball (26) relative to the suction side (19), the first opening (21) having a cress section that prevents the ball to fit through the first opening (21), wherein the air leak passage is provided as part of the first opening (21) wherein the first opening (21) deviates from a circular transversal cross section in order to provide an air leak passage when the ball (26) is resting against the first opening (21), **characterised in that** the first opening (21) has an oval or elliptical transversal cross section and wherein the suction element has a polymer plate (7) made of elastic airtight material for attachment to the articles with the suction side (19), the suction element has a stiffening support (8) for the polymer plate, and the support has re-usable fastening means for fastening the support (8) with the polymer plate (7) to the vacuum chamber (6).

2. Lifting device according to claim 1, wherein the opening is between 0.02 mm and 0.1 mm longer than wide to form the air leak passage.

3. Lifting device according to claim 1, wherein the re-usable fastening means are screws or bolts cooperating with corresponding fastening means of the vacuum chamber.

4. Lifting device according to any preceding claim, wherein the lifting device has a plurality of air channels.

5. Lifting device according to any preceding claim, wherein the ball valve is demountable as a valve unit (12) from the lifting device.

6. Lifting device according to claim 5, wherein the vacuum chamber (2, 3, 4, 6) has a valve hole (18) through the wall of the vacuum chamber (2, 3, 4, 6) for receiving the valve unit (12) therein, and wherein the valve unit has a collar (32) and an o-ring (27) or protrusions (34) arranged at a distance on the valve unit corresponding to the thick ness of the vacuum chamber wall in order for the collar (32) and the o-ring (27) to act as complementary releasable fastening means with a click-action when the valve unit is placed in the valve hole.

7. Lifting device according to claim 5, wherein the vacuum chamber (2, 3, 4, 6) has a valve hole (18) through the wall of the vacuum chamber (2, 3, 4, 6) for receiving the valve unit (12) therein, and wherein the valve unit has collar (32, 33) and an o-ring (34) or protrusion (34) arranged at a distance on the valve unit larger than the thick ness of the vacuum chamber wall for a loose fit of the valve in the case of missing suction.

8. Lifting device according to claim 5, 6, or 7 comprising a plurality of separate vacuum chambers (6), each vacuum chamber (2, 3, 4, 6) being connected to a plurality of holes (18) for receiving valve units (12), the pressure in the plurality of vacuum chambers (6) being mutually different.

## Patentansprüche

1. Hubvorrichtung zum Heben und Verlagerung von Gegenständen und umfassend einen Vakuumkessel (2, 3, 4), der mit einem Saugelement (7, 8, 12) zum Greifen von Gegenständen durch negativen Druck an einer Saugseite (19) eines Saugelements (7, 8, 12) verbunden ist, wobei das Saugelement (7, 8, 12) mindestens einen Kugelhahn mit einem Luftkanal (17, 18, 21, 22, 23, 24) zum Vakuumverkehr des Vakuumkessels (2, 3, 4) mit den Gegenständen durch den Luftkanal (17, 18, 21, 22, 23, 24) aufweist, und der Kugelhahn (12) einen Luftdurchlass, eine Kugel (26) und eine erste Öffnung (21) aufweist, wobei die Öffnung (21) auf der im Verhältnis zur Saugseite (19) gegenüberliegenden Seite der Kugel (26) angeordnet ist und einen Querschnitt aufweist, der die Passage der Kugel durch die erste Öffnung (21) verhindert, wobei der Luftdurchlass als einen Teil der ersten Öffnung (21) vorgesehen ist, wobei die erste Öffnung (21) zur Bildung eines Luftdurchlasses von einem kreisförmigen Querschnitt abweicht, wenn die Kugel (26) gegen die erste Öffnung (21) anliegt, **dadurch gekennzeichnet, dass** die erste Öffnung (21) einen ovalen oder elliptischen Querschnitt aufweist, und das Saugelement eine Polymerplatte (7) aus einem nachgiebigen, luftdichten Material zum Greifen der Gegenstände mit der Saugseite (19) aufweist, wobei der Saugelement eine versteifende Unterlage (8) für die Polymerplatte aufweist, und die versteifende Unterlage wiederverwendbare Befestigungsmittel zur Befestigung der Unterlage (8) mit der Polymerplatte (7) zum Vakuumkessel (6) aufweist.

2. Hubvorrichtung nach Anspruch 1, wobei die Öffnung zur Bildung des Luftdurchlasses zwischen 0,02 mm und 0,1 mm länger als breit ist.

3. Hubvorrichtung nach Anspruch 1, wobei die wiederverwendbaren Befestigungsmittel Schrauben oder Bolzen sind, die mit den entsprechenden Befestigungsmitteln des Vakuumkessels zusammenwirken.

4. Hubvorrichtung nach irgendeinem der vorhergehenden Ansprüchen, wobei die Hubvorrichtung eine Vielzahl von Luftkanälen aufweist.

5. Hubvorrichtung nach irgendeinem der vorhergehenden Ansprüchen, wobei der Kugelhahn als eine Ventileinheit (12) von der Hubvorrichtung demontiert werden kann.

6. Hubvorrichtung nach Anspruch 5, wobei der Vakuumkessel (2, 3, 4, 6) zum Empfangen der Ventileinheit (12) darin ein Ventilloch (18) durch die Wand des Vakuumkessels (2, 3, 4, 6) aufweist, und wobei die Ventileinheit einen Kragen (32) und einen O-Ring (27) oder Vorsprünge (34) aufweist, die der Dicke des Vakuumkessels entsprechend beabstandet auf der Ventileinheit angeordnet sind, damit der Kragen (32) und der O-Ring (27), wenn die Ventileinheit im Ventilloch angeordnet ist, als komplementäre, durch eine Schnappwirkung lösbare Befestigungsmittel funktionieren können.

7. Hubvorrichtung nach Anspruch 5, wobei der Vakuumkessel (2, 3, 4, 6) zum Empfangen der Ventileinheit (12) darin ein Ventilloch (18) durch die Wand des Vakuumkessels (2, 3, 4, 6) aufweist, und wobei die Ventileinheit einen auf der Ventileinheit in einem Abstand grösser als die Dicke der Vakuumkesselwand vorgesehenen Kragen (32, 33) und einen O-Ring (34) oder Vorsprung (34) für lösbare Passung des Ventils bei fehlender Saugung aufweist.

8. Hubvorrichtung nach Anspruch 5, 6 oder 7, die eine Vielzahl von separaten Vakuumkesseln (6) umfasst, wobei jeder Vakuumkessel (2, 3, 4, 6) zum Empfangen von Ventileinheiten (12) mit einer Vielzahl von Löchern (18) verbunden ist, wobei der Druck in der Vielzahl von Vakuumkesseln (6) unterschiedlich ist.

## Revendications

1. Dispositif de levage pour soulever et déplacer des articles, comprenant une chambre à vide (2, 3, 4) reliée à un élément d'aspiration (7, 8, 12) pour la fixation des articles par pression négative à un côté d'aspiration (19) de l'élément d'aspiration (7, 8, 12), l'élément d'aspiration (7, 8, 12) comportant au moins une soupape à boules avec un conduit d'aération (17, 18, 21, 22, 23, 24) pour la connexion à vide entre la chambre à vide (2, 3, 4) et les articles traversant le conduit d'aération (17, 18, 21, 22, 23, 24), la soupape à boules (12) comprenant un passage de fuite d'air, une boule (26) et une première ouverture (21), la première ouverture (21) étant placée du côté opposé de la boule (26) relative au côté d'aspiration (19), la première ouverture (21) ayant une section transversale qui empêche la boule de passer à travers la première ouverture (21), où le passage de fuite d'air est prévu comme une partie de la première ouverture (21), où la première ouverture (21) diffère d'une section transversale circulaire afin de prévoir un passage de fuite d'air quand la boule (26) repose contre la première ouverture (21), **caractérisé en ce que** la première ouverture (21) possède une section transversale ovale ou ellipsoïde et que l'élément d'aspiration possède une plaque polymère (7) fabriquée en matériau étanche à l'air élastique pour la fixation aux articles avec le côté d'aspiration (19), l'élément d'aspiration comprenant un support de consolidation (8) pour la plaque polymère, et le support possède des organes de fixation réutilisables pour la fixation du support (8) avec la plaque polymère (7) à la chambre à vide (6).

2. Dispositif de levage selon la revendication 1, où l'ouverture est entre 0,02 mm et 0,1 mm plus longue que large pour former le passage de fuite d'air.

3. Dispositif de levage selon la revendication 1, où les organes de fixation réutilisables sont des vis et des boulons coopérant avec des organes de fixation correspondants de la chambre à vide.

4. Dispositif de levage selon l'une quelconque des revendications precedentes où le dispositif de levage a plusieurs conduits d'air.

5. Dispositif de levage selon l'une quelconque des revendications precedentes où la soupape à boules est démontable comme une unite de soupape (12) du dispositif de levage.

6. Dispositif de levage selon la revendication 5 où la chambre à vide (2, 3, 4, 6) a un trou de soupape (18) à travers la paroi de la chambre à vide (2, 3, 4, 6) pour y recevoir l'unité de soupape (12), et que l'unité de soupape a un collet (32) et un joint torique (27) ou des saillies (34) arrangées à une distance sur l'unité de soupape correspondant à l'épaisseur de la paroi de la chambre à vide dans le but de faire actionner le collet (32) et le joint torique (27) en tant qu'organes de fixation débrayables complémentaires avec une action de cliquet quand l'unité de soupape est placée dans le trou de soupape.

7. Dispositif de levage selon la revendication 5 où la chambre à vide (2, 3, 4, 6) a un trou de soupape (18) à travers la paroi de la chambre à vide (2, 3, 4, 6) pour y recevoir l'unité de soupape (12), et que l'unité de soupape a un collet (32, 33) et un joint torique (34) ou des saillies (34) arrangées à une distance sur l'unité de soupape plus grande que l'épaisseur de la paroi de la chambre à vide pour un ajustement libre de la soupape en cas d'absence d'aspiration.

8. Dispositif de levage selon la revendication 5, 6 ou 7 comportant plusieurs chambres à vide séparées (6), chaque chambre à vide (2, 3, 4, 6) étant reliée à plusieurs trous (18) pour y recevoir des unites de soupape (12), la pression dans les différentes chambres à vide (6) étant mutuellement différente.
